(19) **Europäisches Patentamt / European Patent Office / Office européen des brevets**

(11) **EP 3 990 324 B1**

(12) **FASCICULE DE BREVET EUROPEEN**

(45) Date de publication et mention de la délivrance du brevet:
**31.07.2024   Bulletin 2024/31**

(21) Numéro de dépôt: **20733283.4**

(22) Date de dépôt: **18.06.2020**

(51) Classification Internationale des Brevets (IPC):
**B60W 30/10** *(2006.01)*    **B60W 30/12** *(2020.01)*
**B60W 30/095** *(2012.01)*    **B60W 50/00** *(2006.01)*
**B62D 15/02** *(2006.01)*

(52) Classification Coopérative des Brevets (CPC):
**B60W 30/12; B60W 30/095; B60W 30/10; B62D 15/025;** B60W 2050/0071; B60W 2050/0096; B60W 2510/205; B60W 2520/10; B60W 2520/12; B60W 2520/14; B60W 2540/18; B60W 2552/53; B60W 2556/50; B60W 2710/207

(86) Numéro de dépôt international:
**PCT/EP2020/066867**

(87) Numéro de publication internationale:
**WO 2020/260114 (30.12.2020 Gazette 2020/53)**

(54) **PROCÉDÉ DE RÉGULATION DE LA POSITION LATÉRALE D'UN VÉHICULE**

VERFAHREN ZUR REGELUNG DER SEITLICHEN POSITION EINES FAHRZEUGES

METHOD FOR REGULATING THE LATERAL POSITION OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **26.06.2019   FR 1906936**

(43) Date de publication de la demande:
**04.05.2022   Bulletin 2022/18**

(73) Titulaires:
• **Ampere SAS**
  **92100 Boulogne-Billancourt (FR)**
• **NISSAN MOTOR Co., Ltd.**
  **Yokohama-shi, Kanagawa 221-0023 (JP)**
  Etats contractants désignés:
  **AL AT BG CH CZ DE DK EE ES FI GB HR HU IS LI LU MK NO PL PT RO RS SE SK TR**

(72) Inventeurs:
• **PEYRET, Maud**
  **75014 PARIS (FR)**
• **RUETE, Jon**
  **92400 COURBEVOIE (FR)**
• **SALIOU, Sebastien**
  **35000 RENNES (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**FR-A1- 3 043 977     US-A1- 2008 047 775**

## Description

### Domaine Technique de l'invention

L'invention concerne un procédé de régulation de la position latérale d'un véhicule sur une voie de circulation, notamment d'un véhicule autonome. L'invention concerne notamment une étape d'initialisation exécutée au moment de l'activation du procédé de régulation. L'invention porte aussi sur un véhicule automobile comprenant des moyens matériels et/ou logiciels mettant en oeuvre un tel procédé.

### Etat de la technique antérieure

Un véhicule autonome comporte généralement un système de direction asservi à un calculateur. Le système de direction contrôle l'orientation des roues directrices du véhicule de sorte que le véhicule suive de manière autonome une trajectoire donnée. Le calculateur met en oeuvre des procédés de régulation permettant de positionner latéralement le véhicule sur une voie de circulation. Notamment, le calculateur peut mettre en oeuvre un procédé de régulation dénommé LCA (acronyme anglais signifiant "Lane Centering Assist") permettant de maintenir un véhicule au centre de sa voie de circulation.

Lorsque de tels procédés sont activés en cours de conduite, le véhicule passe d'une trajectoire définie manuellement par le conducteur à une trajectoire de référence déterminée de manière autonome. Ce changement de trajectoire peut dans certains cas particuliers générer des accélérations latérales importantes du véhicule. Ces accélérations latérales peuvent causer une anxiété des passagers, voire une déstabilisation ou une perte d'adhérence du véhicule.

En particulier, on observe que les accélérations latérales subies par le véhicule lors de la transition entre un contrôle manuel de la trajectoire et un contrôle autonome de la trajectoire sont particulièrement élevées dans certaines situations particulières. Notamment, elles sont particulièrement élevées lorsque les capteurs du véhicule, en particulier le capteur d'angle au volant du véhicule, ne sont pas calibrés ou comprennent un offset de calibration (c'est-à-dire un décalage entre la valeur mesurée par ce capteur et la valeur réelle). Ces accélérations latérales sont également particulièrement élevées lorsque le véhicule avance sur une voie de circulation déversante ou bombée, c'est-à-dire une voie de circulation inclinée latéralement, au moment de cette transition.

FR 3 043 977 A1 concerne un procédé d'aide à la conduite d'un véhicule automobile au cours duquel, lorsqu'une sortie inopinée de ce véhicule de la voie de circulation qu'il emprunte est détectée, on déclenche une phase d'intervention au cours de laquelle on exerce sur un organe de direction de ce véhicule un couple correctif pour que le véhicule automobile suive une trajectoire cible, ledit couple correctif étant déterminé en fonction d'un angle de braquage cible filtré qui est calculé de manière :

- à un instant initial de ladite phase d'intervention, à être égale à un angle de braquage effectif de cet organe de direction, puis
- après cet instant initial, à tendre vers un angle de braquage cible dans lequel ledit organe de direction devrait être placé pour que le véhicule automobile suive ladite trajectoire cible.

### Présentation de l'invention

Le but de l'invention est de fournir un procédé de régulation de la position d'un véhicule sur une voie de circulation remédiant aux inconvénients ci-dessus et améliorant les procédés de régulation connus de l'art antérieur.

Plus précisément, un premier objet de l'invention est un procédé de régulation de la position latérale d'un véhicule sur une voie de circulation permettant d'éviter de trop fortes accélérations latérales du véhicule lors de son activation.

Un second objet de l'invention est un procédé de régulation de la position d'un véhicule sur une voie de circulation permettant de limiter l'angle maximal de braquage des roues directrices du véhicule.

### Résumé de l'invention

L'invention se rapporte à un procédé de régulation de la position latérale d'un véhicule sur une voie de circulation, le procédé de régulation comprenant :

- une étape de calcul d'un vecteur d'état de référence du véhicule,
- une étape de calcul d'un vecteur d'état observé du véhicule,
- une étape de calcul d'une consigne d'un angle de braquage de roues directrices du véhicule en fonction de la différence entre le vecteur d'état de référence et le vecteur d'état observé,

le procédé de régulation comprenant une étape d'initialisation exécutée au moment de l'activation du procédé de régulation, l'étape d'initialisation comprenant une sous-étape de calcul d'une composante d'un vecteur d'état observé initial de sorte que la consigne d'angle de braquage des roues directrices au moment de l'activation du procédé de régulation soit égale à une valeur mesurée d'angle de braquage des roues directrices au moment de l'activation du procédé de régulation.

Le vecteur d'état observé peut comprendre tout ou partie des composantes suivantes :

- une vitesse de lacet du véhicule, et/ou
- un angle de cap du véhicule, et/ou
- une vitesse latérale du véhicule, et/ou
- un écart latéral du véhicule par rapport à une trajectoire de référence, et/ou
- une vitesse de braquage des roues directrices du véhicule, et/ou
- un angle de braquage des roues directrices du véhicule, et/ou
- une intégrale de l'écart latéral du véhicule par rapport à une trajectoire de référence.

Lors de la sous-étape de calcul d'une composante du vecteur d'état observé initial, ladite composante peut être calculée en fonction d'une valeur mesurée de l'angle de braquage au moment de l'activation du procédé de régulation.

Le vecteur d'état observé peut comprendre une composante égale à une intégrale de l'écart latéral du véhicule par rapport à une trajectoire de référence, la valeur initiale de l'intégrale de l'écart latéral définie lors de l'étape d'initialisation étant calculée de sorte que la consigne d'angle de braquage des roues directrices au moment de l'activation du procédé de régulation soit égale à une valeur mesurée d'angle de braquage des roues directrices au moment de l'activation du procédé de régulation.

L'étape de calcul de la consigne de l'angle de braquage peut comprendre une multiplication de la différence entre le vecteur d'état de référence et le vecteur d'état observé par un vecteur de régulation, le vecteur de régulation étant dépendant de la vitesse du véhicule.

La valeur initiale de l'intégrale de l'écart latéral du véhicule par rapport à la trajectoire de référence peut être calculée en fonction de composantes de la différence entre le vecteur d'état de référence et le vecteur d'état observé, et en fonction des composantes du vecteur de régulation, et en fonction de la valeur mesurée d'angle de braquage au moment de l'activation du procédé de régulation.

Le calcul du vecteur d'état observé peut être basé sur des grandeurs mesurées par des capteurs embarqués du véhicule, des constantes caractérisant le véhicule, la vitesse du véhicule, et une valeur de consigne d'un angle de braquage des roues directrices du véhicule calculée lors d'une précédente itération du procédé de régulation.

L'invention se rapporte également à un produit programme d'ordinateur comprenant des instructions de code de programme enregistrées sur un support lisible par ordinateur pour mettre en oeuvre les étapes du procédé de régulation tel que défini précédemment lorsque ledit programme fonctionne sur un ordinateur.

L'invention se rapporte également à un support d'enregistrement de données, lisible par un ordinateur, sur lequel est enregistré un programme d'ordinateur comprenant des instructions de code de programme de mise en oeuvre du procédé de régulation tel que défini précédemment.

L'invention se rapporte également à un véhicule automobile comprenant des moyens matériels et/ou logiciels mettant en oeuvre le procédé de régulation tel que défini précédemment.

**Présentation des figures**

Ces objets, caractéristiques et avantages de la présente invention seront exposés en détail dans la description suivante d'un mode de réalisation particulier fait à titre non-limitatif en relation avec les figures jointes parmi lesquelles :

[Fig. 1] La figure 1 est une vue schématique de dessus d'un véhicule automobile selon un mode de réalisation de l'invention.
[Fig. 2] La figure 2 est une vue schématique de dessus du véhicule sur une voie de circulation.
[Fig. 3] La figure 3 est une vue schématique de face du véhicule sur une voie de circulation.
[Fig. 4] La figure 4 est un synoptique d'un procédé de régulation selon un mode de réalisation de l'invention.
[Fig. 5] La figure 5 est une vue schématique d'un régulateur mis en oeuvre dans le procédé de régulation.
[Fig. 6] La figure 6 est un graphique illustrant les performances d'un procédé de régulation selon un mode de réalisation de l'invention en comparaison avec un procédé de régulation selon l'état de la technique.

## Description détaillée

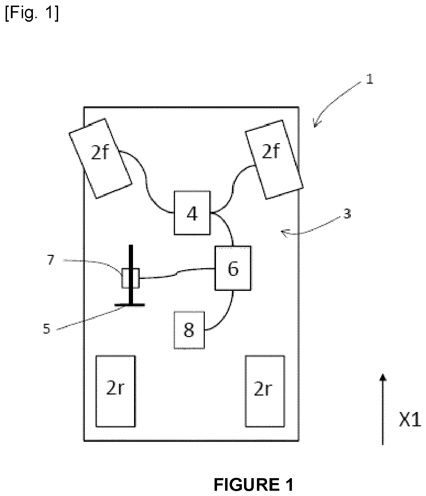

La figure 1 illustre schématiquement un véhicule 1 automobile selon un mode de réalisation de l'invention. Le véhicule 1 peut être de toute nature. Notamment, il peut être par exemple un véhicule particulier, un véhicule utilitaire, un camion ou un bus. Le véhicule 1 comprend deux roues avant 2f directrices et deux roues arrières 2r. L'orientation des roues directrices 2f peut être contrôlée par un système de direction 3. Le système de direction 3 comprend un dispositif de direction 4 en liaison mécanique avec les deux roues avant 2f et un volant 5 en liaison mécanique avec le dispositif de direction 4. Le système de direction peut également comprendre un module de direction assistée, par exemple intégré au dispositif de direction 4. Le système de direction 3 comprend en outre une unité de commande électronique 6 et un capteur d'angle au volant 7. Le capteur d'angle au volant 7 est apte à mesurer l'orientation du volant 7. Il peut notamment mesurer la position angulaire d'une colonne de direction reliée au volant 7. L'orientation du volant 7 est proportionnelle à l'orientation des roues directrices 2f, c'est-à-dire à l'angle de braquage des roues directrices 2f. Ainsi, la commande d'un angle de braquage des roues directrices est équivalente à la commande d'un angle au volant du véhicule 1. Par ailleurs, le véhicule 1 peut aussi être équipé d'autres capteurs tels qu'un capteur de lacet et/ou au moins un capteur de vitesse roue permettant de déterminer la vitesse du véhicule.

L'unité de commande électronique 6 est reliée électriquement au capteur d'angle au volant 7, au dispositif de direction 4, et éventuellement à d'autres capteurs du véhicule. Elle comprend notamment une mémoire, un microprocesseur et des interfaces d'entrée/sortie pour recevoir des données en provenance d'autres équipements du véhicule 1 ou pour émettre des données à l'attention d'autres équipements du véhicule 1. La mémoire de l'unité de commande électronique est un support d'enregistrement de données sur lequel est enregistré un programme d'ordinateur comprenant des instructions de code de programme de mise en oeuvre d'un procédé selon un mode de réalisation de l'invention. Le microprocesseur est apte à exécuter ce procédé. Notamment, l'unité de commande électronique 6 est apte à envoyer des ordres de commande au dispositif de direction 4 via son interface d'entrée/sortie de sorte à braquer, c'est-à-dire orienter, les roues directrices selon un angle calculé. On peut définir un axe longitudinal X1 du véhicule comme l'axe parallèle à la direction dans laquelle se dirige le véhicule en ligne droite.

Le véhicule 1 comprend aussi des moyens de détection 8 de l'environnement du véhicule 1, comme par exemple des radars, des lidars ou des caméras. Les moyens de détection 8 sont également reliés à l'unité de commande électronique 6. Le véhicule 1 est un véhicule autonome, c'est-à-dire que le système de direction peut contrôler l'orientation des roues directrices 2f sans qu'un conducteur manipule le volant 5. Le véhicule 1 peut donc se diriger et se maintenir sur une voie de direction sans intervention d'un conducteur. Le véhicule 1 peut également être contrôlé de manière conventionnelle par un conducteur, en actionnant le volant. Le véhicule 1 peut donc être utilisé selon deux modes de fonctionnement distincts : dans un premier mode, dit mode manuel, l'orientation des roues directrices est contrôlée par le conducteur. Dans un deuxième mode, dit mode autonome, l'orientation des roues directrices est contrôlée par l'unité de commande électronique, notamment grâce aux moyens de détection 8 qui lui sont reliés.

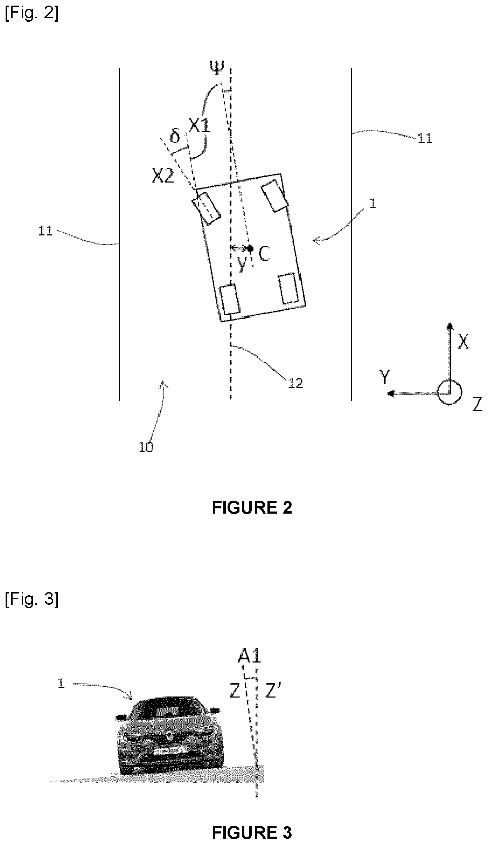

La figure 2 illustre le véhicule 1 circulant sur une voie de circulation 10. La voie de circulation 10 est délimitée à gauche et à droite par deux lignes de démarcation 11, matérialisées sur la voie de circulation par exemple sous la forme de lignes continues ou de lignes en pointillés, de couleur blanche ou jaune. Les moyens de détection 8 sont aptes à identifier les lignes de démarcation 11. L'unité de commande électronique comprend des moyens logiciels permettant de calculer une trajectoire de référence 12 ou trajectoire de consigne. La trajectoire de référence 12 est identifiée par une ligne en pointillés sur la figure 2. La trajectoire de référence 12 est une ligne théorique, non visible sur la voie de circulation 10. La trajectoire de référence 12 peut être par exemple une ligne située à équidistance des deux lignes de démarcation 11. En variante, la trajectoire de référence 12 pourrait être définie différemment. Elle pourrait être décalée davantage vers l'une ou l'autre des deux lignes de démarcation 11. Elle pourrait également être calculée en fonction de la détection d'obstacles ou d'autres véhicules présents sur la voie de circulation ou sur des voies de circulation adjacentes à la voie de circulation 10.

Dans ce document on définit l'axe longitudinal X comme l'axe de la voie de circulation parallèle à la trajectoire de référence à hauteur du véhicule 1. L'axe transversal Y est l'axe de la voie de circulation perpendiculaire à la trajectoire de référence à hauteur du véhicule 1. L'axe Z est l'axe perpendiculaire au plan moyen formé par la voie de circulation. Les axes X, Y et Z forment un repère orthogonal.

La voie de circulation illustrée sur la figure 2 est en ligne droite. Toutefois, l'invention peut aussi bien être mis en oeuvre lorsque la voie de circulation décrit une courbe ou un virage. Comme cela apparaît sur la figure 3, la voie de circulation 10 peut être en dévers. L'axe Z, normal à la surface de la voie de circulation 10, est donc incliné d'un angle A1 non nul par rapport à un axe vertical Z'. L'angle A1 est orienté transversalement. C'est-à-dire que la voie de circulation est en pente selon l'axe transversal Y. Lorsque le véhicule circule sur une telle voie de circulation, les roues directrices doivent être légèrement braquées, en général vers le haut de la pente, pour que le véhicule maintienne une trajectoire en ligne droite. Un glissement à l'interface entre les roues directrices 2f et la voie de circulation peut alors se produire. Dans une telle situation, les roues directrices ne sont pas parfaitement alignées avec la direction que suit le véhicule.

L'angle au volant mesuré par le capteur d'angle au volant fournit donc une valeur d'angle au volant qui est décalée par rapport à celle qu'on appliquerait si le véhicule devait suivre le même cap sur une voie de circulation plane. L'invention qui est décrite pourra avantageusement être mise en oeuvre sur une telle voie de circulation déversante, et conduira à une régulation de la position du véhicule sans à-coup comparativement aux procédés de régulation de la position d'un véhicule connus de l'état de la technique.

L'invention pourra également être avantageusement mise en oeuvre sur une voie de circulation bombée selon la direction transversale. Sur une telle route la partie de la voie de circulation en contact avec la roue avant gauche n'est pas parallèle à la partie de la voie de circulation en contact avec la roue avant droite. Dans les pays avec conduite à droite, des routes de forme bombée peuvent être construites pour que les véhicules qui circulent sur la chaussée dérivent légèrement vers la droite de la chaussée. En cas de baisse de vigilance du conducteur, on évite ainsi que le conducteur percute un véhicule arrivant dans le sens opposé et donc sur la gauche du conducteur. Plus généralement l'invention sera avantageusement mise en oeuvre dans toutes les situations où l'angle de braquage des roues directrices obtenu par le capteur d'angle au volant ne correspond pas à la direction que suit effectivement le véhicule.

L'état du véhicule, c'est-à-dire sa position sur la voie de circulation 10 et sa trajectoire, peut être caractérisé par un ensemble de grandeurs physiques, ou variables d'état, représentées en partie sur la figure 2. Notamment, l'état du véhicule peut être caractérisé par :

- une vitesse de lacet $d\psi$ du véhicule, et/ou
- un angle de cap $\psi$ du véhicule, et/ou
- une vitesse latérale $dy$ du véhicule, et/ou
- un écart latéral $y$ du véhicule par rapport à une trajectoire de référence, et/ou
- une vitesse de braquage $d\delta$ des roues directrices du véhicule, et/ou
- un angle de braquage $\delta$ des roues directrices du véhicule, et/ou
- une intégrale de l'écart latéral $ly$ du véhicule par rapport à une trajectoire de référence.

La vitesse de lacet $d\psi$ est la vitesse de rotation du véhicule autour de l'axe Z. La vitesse de lacet peut être mesurée par exemple au moyen d'un capteur de lacet. L'angle de cap $\psi$ peut être défini comme l'angle formé entre l'axe longitudinal X de la voie de circulation 10, c'est-à-dire l'axe tangent à la trajectoire de référence 12 à hauteur du véhicule, et l'axe longitudinal X1 du véhicule. L'écart latéral $y$ peut être défini comme la distance séparant un point du véhicule (notamment son centre de gravité C) de la trajectoire de référence 12. En variante, l'écart latéral $y$ pourrait également mesurer la distance séparant un point du véhicule d'une ligne de démarcation 11. L'angle de cap $\psi$ et l'écart latéral $y$ peuvent être calculés par exemple grâce aux moyens de détection 8 du véhicule. La vitesse latérale $dy$ est la dérivée par rapport au temps de l'écart latéral $y$. L'intégrale de l'écart latéral $ly$ peut être calculée par rapport au temps et depuis un moment initial correspondant au moment de l'activation du procédé de régulation.

L'angle de braquage $\delta$ des roues directrices peut être défini comme l'angle formé entre l'axe X2 parallèle à la direction de roulement des roues directrices et l'axe longitudinal X1 du véhicule. L'angle de braquage $\delta$ est proportionnel à l'angle au volant mesuré par le capteur d'angle au volant 7. En remarque, lorsque le véhicule tourne, les deux roues directrices d'un véhicule sont en général braquées selon des angles légèrement différents afin de tenir compte des rayons de courbures différents suivis par chacune des roues directrices. Avantageusement, l'état du véhicule peut être simplifié en utilisant un modèle dit "bicyclette", c'est-à-dire en considérant une unique roue directrice dont l'angle de braquage fait suivre au véhicule la même courbure que le feraient deux roues directrices avec des angles de braquage différents. L'angle de braquage des roues directrices en utilisant le modèle "bicyclette" peut être par exemple un angle moyen entre l'angle de braquage de la roue directrice gauche et l'angle de braquage de la roue directrice droite. La vitesse de braquage $d\delta$ des roues directrices est la dérivée par rapport au temps de l'angle de braquage $\delta$.

A l'aide des variables d'état qui viennent d'être décrites, on peut définir un vecteur d'état X de la manière suivante :

[Math1]

$$X = \begin{pmatrix} d\psi \\ \psi \\ dy \\ y \\ d\delta \\ \delta \\ -Iy \end{pmatrix}$$

Le vecteur d'état X comprend donc sept composantes. Il permet de caractériser la position et la trajectoire du véhicule 1 à un instant donné. En variante, les composantes du vecteur d'état pourraient être présentées dans un ordre différent, voire même comprendre des grandeurs différentes en remplacement ou en complément des grandeurs proposées. La description qui va suivre serait alors adaptée en conséquence. D'une manière générale, le vecteur d'état peut caractériser la position, la vitesse et l'accélération subie par le véhicule à un instant donné. Le vecteur d'état est donc un vecteur variable temporellement.

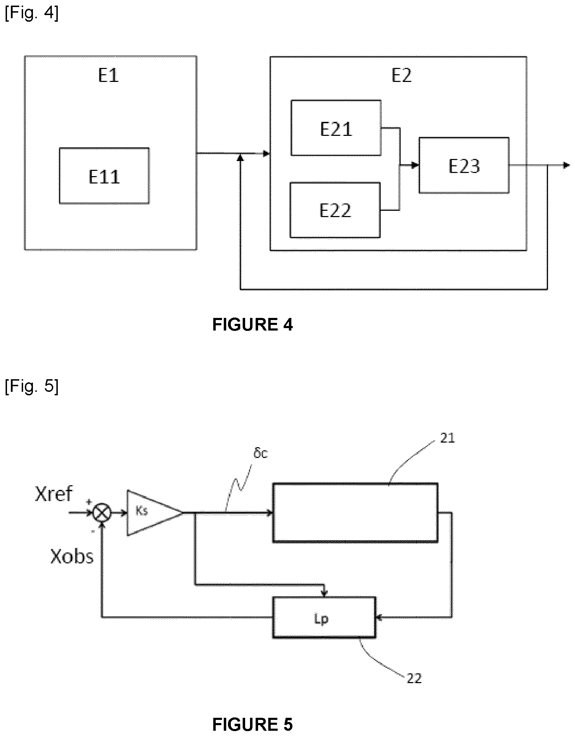

En référence à la figure 4, nous allons à présent décrire un procédé de régulation de la position latérale du véhicule 1 sur la voie de circulation 10. Le procédé peut être décomposé en deux étapes principales E1 et E2. La première étape E1 est une étape d'initialisation exécutée au moment de l'activation du procédé de régulation. Notamment, la première étape E1 peut être exécutée lors de la transition entre un mode de conduite manuel et un mode de conduite autonome du véhicule 1. La deuxième étape E2 est une étape de régulation de la position du véhicule 1 exécutée à la suite de l'étape d'initialisation E1. La deuxième étape sert à calculer une consigne d'angle de braquage δc pour les roues directrices du véhicule. La deuxième étape peut être ensuite répétée selon une fréquence donnée, et tant que le véhicule 1 est contrôlé de manière autonome.

Pour bien comprendre l'invention, nous allons décrire tout d'abord la deuxième étape E2 puis la première étape E1. La deuxième étape E2 est illustrée schématiquement sur la figure 5 montrant un système d'asservissement en boucle fermée.

La deuxième étape E2 comprend une étape de calcul E21 d'un vecteur d'état de référence Xref du véhicule, une étape de calcul E22 d'un vecteur d'état observé Xobs du véhicule, et une étape de calcul E23 d'une consigne d'un angle de braquage δc des roues directrices du véhicule en fonction de la différence Xerr entre le vecteur d'état de référence Xref et le vecteur d'état observé Xobs. Ensuite, la consigne d'un angle de braquage δc est utilisée pour le calcul du vecteur d'état observé Xobs lors d'une itération suivante de la deuxième étape E2.

Lors de l'étape de calcul E21, le vecteur d'état de référence Xref est calculé. Ce vecteur d'état décrit la position et la trajectoire souhaitée pour le véhicule. Ce vecteur d'état peut être calculé notamment en fonction de la trajectoire de référence 12. Comme le véhicule 1 subit diverses perturbations résultant par exemple de facteurs externes au véhicule 1 ou de facteurs internes au véhicule 1, le vecteur d'état de référence Xref à un instant donné peut être différent du vecteur d'état observé Xobs du véhicule.

Lors de l'étape de calcul E22, on calcule le vecteur d'état observé Xobs à partir de capteurs embarqués dans le véhicule, d'un modèle cinématique du véhicule (identifié par 21 sur la figure 5) et d'un observateur (identifié par 22 sur la figure 5). Le modèle cinématique 21 peut être décrit par l'équation suivante :

[Math 2]

$$dX = A.X + B1.\delta c + B2.\rho$$

Equation dans laquelle :

- dX est la dérivée par rapport au temps du vecteur d'état X,
- δc est la consigne d'angle de braquage des roues directrices calculée lors d'une précédente itération de la deuxième étape E2,
- ρ est la courbure de la voie de circulation. Cette valeur est nulle lorsque la voie de circulation est en ligne droite. Pour simplifier la suite de la description, on considère que la voie de circulation est effectivement en ligne droite. Le procédé de régulation selon l'invention pourra toutefois être transposé à une situation dans laquelle le véhicule circule le long d'une courbe.
- A est une matrice 7x7 qui sera définie plus bas,
- B1 et B2 sont des vecteurs à sept composantes définis plus bas.

La matrice A peut être définie par la formule suivante :

[Math 3]

$$A = \begin{pmatrix} -\dfrac{(c_f l_f^2 + c_r l_r^2)}{I_z v} & \dfrac{(c_f l_f - c_r l_r)}{I_z} & -\dfrac{(c_f l_f - c_r l_r)}{I_z v} & 0 & 0 & \dfrac{(c_f l_f)}{I_z} & 0 \\ & 1 & 0 & 0 & 0 & 0 & 0 \\ \dfrac{(cf\, l_f - c_r l_r)}{mv} & \dfrac{(c_f + c_r)}{m} & -\dfrac{(c_f + c_r)}{mv} & 0 & 0 & \dfrac{c_f}{m} & 0 \\ & 0 & 0 & 1 & 0 & 0 & 0 & 0 \\ 0 & 0 & 0 & 0 & -2\zeta\omega & -2\omega^2 & 0 \\ 0 & 0 & 0 & 0 & 1 & 0 & 0 \\ 0 & 0 & 0 & -1 & 0 & 0 & 0 \end{pmatrix}$$

Dans laquelle :

- cf désigne la rigidité de dérive d'un train avant du véhicule,
- cr désigne la rigidité de dérive d'un train arrière du véhicule,
- lf désigne la distance entre le centre de gravité C du véhicule et le train avant,
- lr désigne la distance entre le centre de gravité C du véhicule et le train arrière,
- lz désigne l'inertie du véhicule,
- m désigne la masse du véhicule,
- v désigne la vitesse du véhicule,
- $\zeta$ désigne un facteur d'amortissement du système de direction,
- $\omega$ désigne une fréquence propre d'un filtre du système de direction.

Les paramètres cf, cr, lf, lr, lz, m, $\zeta$ et $\omega$ sont donc des constantes caractérisant le véhicule. Ils peuvent être définis une fois pour toute lors de la mise au point du véhicule, et être mémorisés dans la mémoire de l'unité de commande électronique.

Le vecteur B1 peut être défini par la formule suivante :

[Math 4]

$$B1 = \begin{pmatrix} 0 \\ 0 \\ 0 \\ 0 \\ \omega^2 \\ 0 \\ 0 \end{pmatrix}$$

Dans laquelle $\omega$ désigne la fréquence propre d'un filtre du système de direction.

Le vecteur B2 peut être défini par la formule suivante :

[Math 5]

$$B2 = \begin{pmatrix} 0 \\ -v \\ -v^2 \\ 0 \\ 0 \\ 0 \\ 0 \end{pmatrix}$$

Dans lequel v désigne la vitesse du véhicule.

Par ailleurs, on peut définir un vecteur de mesure Y par la formule suivante:

### [Math 6]

$$Y = C.X$$

Dans laquelle C désigne une matrice diagonale permettant d'isoler les variables d'état composant le vecteur X qui sont accessibles directement grâce à des capteurs embarqués dans le véhicule 1. La matrice C est donc une matrice qui dépend des mesures accessibles sur le véhicule.

Sur la base du modèle cinématique 21 présenté ci-dessus, on peut calculer le vecteur d'état observé Xobs à l'aide de l'observateur 22. L'observateur 22 permet d'estimer les composantes non mesurées du vecteur d'état observé. Dans le cas où la courbure de la route est nulle, le vecteur d'état observé peut ainsi être calculé grâce à l'équation suivante :

### [Math 7]

$$dXobs = (A - Lp.C).Xobs + B1.\delta + Lp.Y$$

Dans laquelle :

- Xobs désigne le vecteur d'état observé
- dXobs désigne la dérivée par rapport au temps du vecteur d'état observé,
- Lp est une matrice linéaire positive dépendant de la vitesse du véhicule,
- A, B1, C et $\delta$ sont les grandeurs définies plus haut.

Lors de la troisième étape de calcul E23, on calcule tout d'abord la différence entre le vecteur d'état de référence Xref et le vecteur d'état observé Xobs. On obtient ainsi un vecteur Xerr représentant l'erreur entre l'état théorique du véhicule et son état réel. Le vecteur Xerr peut donc être défini par la formule suivante :

### [Math 8]

$$Xerr = Xref - Xobs$$

Ensuite on déduit du vecteur Xerr la consigne d'angle de braquage des roues directrices en multipliant Xerr par un vecteur de régulation Ks, le vecteur de régulation Ks étant un vecteur dépendant de la vitesse du véhicule. Ainsi, la consigne d'angle de braquage $\delta c$ des roues directrices peut être calculée à l'aide de la formule suivante :

### [Math 9]

$$\delta c = Ks.Xerr + \delta vir$$

Dans laquelle $\delta vir$ désigne l'angle de braquage des roues directrices nécessaire pour suivre la courbure d'un éventuel virage dans lequel se trouverait le véhicule. En supposant que le procédé est réalisé sur une voie de circulation en ligne droite, le terme $\delta vir$ serait donc nul.

En remarque, la deuxième étape E2 utilise le vecteur Ks et à la matrice Lp toutes deux définies en fonction de la vitesse du véhicule. La mémoire de l'unité de contrôle électronique peut donc contenir différentes valeurs du vecteur Ks et de la matrice Lp définies pour des valeurs de vitesse prédéfinies. Lorsque le véhicule circule effectivement à une vitesse intermédiaire entre deux valeurs de vitesse prédéfinies, le vecteur Ks et la matrice Lp peuvent être extrapolés grâce à une pondération respectivement des vecteurs Ks et des matrices Lp mémorisées pour une vitesse supérieure et une vitesse inférieure à la vitesse réelle du véhicule.

On s'attache à présent à décrire la première étape E1 lors de laquelle le procédé de régulation est initialisé.

L'étape d'initialisation E1 comprend une sous-étape E11 de calcul d'une composante du vecteur d'état observé initial X0 de sorte que la consigne d'angle de braquage $\delta c$ des roues directrices au moment de l'activation du procédé de régulation soit égale à l'angle de braquage des roues directrices mesuré $\delta m$ au moment de l'activation du procédé de régulation. Le vecteur d'état observé initial X0 correspond au vecteur d'état observé à l'instant de la transition entre le mode de conduite manuel et le mode de conduite autonome, c'est-à-dire au moment de l'initialisation du procédé de régulation. On impose donc des conditions initiales particulières au vecteur d'état observé de sorte à obtenir une transition sans à-coup entre le mode de conduite manuel et le mode de conduite autonome. L'angle de braquage mesuré $\delta m$ des roues directrices est obtenu grâce au capteur d'angle au volant, en multipliant l'angle au volant par un coefficient de proportionnalité dépendant du dispositif de direction. Quand bien même le capteur d'angle au volant 7 renverrait une valeur mesurée différente de l'angle au volant réel (par exemple avec un offset par rapport à la valeur réel), la consigne d'angle de braquage est égale à cette valeur mesurée. Ainsi, on évite de faire varier brusquement l'angle de braquage des roues directrices lors de l'initialisation.

Le vecteur d'état observé initial X0, plus simplement dénommé vecteur X0 par la suite correspond au vecteur d'état observé au moment de l'étape d'initialisation E1. Il peut défini par la formule suivante :

[Math 10]

$$X0 = \begin{pmatrix} X01 \\ X02 \\ X03 \\ X04 \\ X05 \\ X06 \\ X07 \end{pmatrix} = \begin{pmatrix} d\psi0 \\ \psi0 \\ dy0 \\ y0 \\ d\delta0 \\ \delta0 \\ X07 \end{pmatrix}$$

Dans laquelle :

- X01, X02, X03, X04, X05, X06, X07 désignent respectivement la première, deuxième, troisième, quatrième, cinquième, sixième et septième composante du vecteur X0
- $d\psi0$ est la vitesse de lacet du véhicule mesurée ou calculée à l'instant présent, c'est-à-dire au moment de l'initialisation du procédé de régulation,
- $\psi0$ est l'angle de cap du véhicule mesuré ou calculé au moment de l'étape d'initialisation E1,
- $dy0$ est la vitesse latérale dy du véhicule mesurée ou calculée au moment de l'étape d'initialisation E1,
- $y0$ est l'écart latéral du véhicule par rapport à la trajectoire de référence mesuré ou calculé au moment de l'étape d'initialisation E1,
- $d\delta0$ est la vitesse de braquage des roues directrices du véhicule mesurée ou calculée au moment de l'étape d'initialisation E1,
- $\delta0$ est l'angle de braquage des roues directrices du véhicule mesuré ou calculé au moment de l'étape d'initialisation E1,
- X07 est la septième composante du vecteur X0. X07 est calculée avec la formule suivante :

[Math 11]

$$X07 = \frac{-1}{K_{s,7}}\left(\delta_m - \delta_{vir} - \sum_{i=1}^{6} K_{s,i}.Xerr,i\right)$$

Dans laquelle :

- Ks,i désigne la composante i du vecteur de régulation Ks,
- Xerr,i désigne la composante i de la différence entre le vecteur de référence et le vecteur X0 au moment de l'étape d'initialisation E1,
- $\delta m$ est l'angle de braquage des roues directrices du véhicule mesuré au moment de l'étape d'initialisation E1, obtenu grâce au capteur d'angle au volant.
- $\delta vir$ désigne l'angle de braquage des roues directrices nécessaire pour suivre la courbure d'un éventuel virage dans lequel se trouverait le véhicule.

La septième composante X07 est donc calculée en fonction de la valeur mesurée de l'angle de braquage $\delta m$ au moment de l'activation du procédé de régulation, mais également en fonction du vecteur de régulation Ks.

En imposant une telle valeur initiale à la septième composante du vecteur X0, on obtient lors de la première itération de l'étape de calcul E2 une consigne d'angle de braquage $\delta c$ des roues directrices égale à l'angle de braquage des roues directrices du véhicule mesuré $\delta m$ au moment de l'activation du procédé de régulation. En effet, la septième composante du vecteur de référence Xref est nulle lors de la première itération de l'étape de calcul E2, la résolution de l'équation Math9 définie plus haut conduit donc à δc = δm.

Par conséquent la septième composante X07 du vecteur X0, représentant la valeur initiale de l'intégrale de l'écart latéral ly du véhicule par rapport à la trajectoire de référence, est définie de sorte que la valeur de consigne d'angle de braquage des roues directrices au moment de l'activation du procédé de régulation soit égale à un angle de braquage des roues directrices mesuré au moment de l'activation du procédé de régulation. La valeur initiale de l'intégrale de l'écart latéral du véhicule par rapport à la trajectoire de référence n'est donc pas définie à une valeur constante, notamment elle n'est pas définie à une valeur nulle. Au contraire, elle est calculée en fonction de la valeur mesurée de l'angle de braquage des roues directrices au moment de l'activation du procédé de régulation. Ensuite, lors des itérations suivantes de l'étape de calcul E2, l'intégrale de l'écart latéral ly (c'est-à-dire la septième composante du vecteur d'état observé Xobs) pourra, en partant de cette valeur initiale calculée, être incrémentée ou décrémentée selon que le véhicule se décale latéralement vers la gauche ou vers la droite.

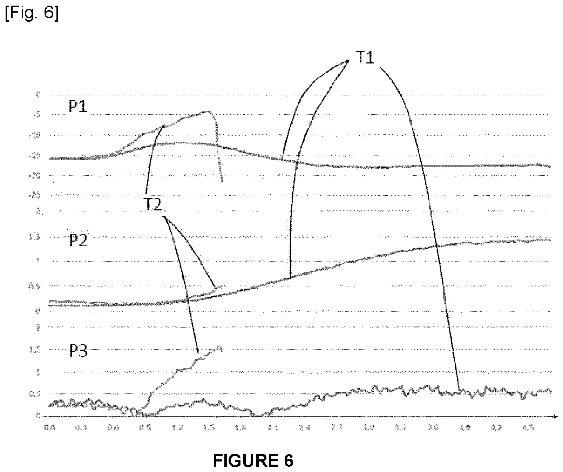

La figure 6 est un graphique permettant de comparer la trajectoire T1 suivie par le véhicule 1 mettant en oeuvre un procédé de régulation selon un mode de réalisation de l'invention avec la trajectoire T2 suivie par le véhicule 1 mettant en oeuvre un procédé de régulation selon l'état de la technique. Pour réaliser cette comparaison, on applique un offset de 15° sur la valeur d'angle au volant émise par le capteur d'angle au volant. Il y a donc un décalage de 15° entre l'angle au volant réel et l'angle au volant mesuré. Cette situation illustre un cas extrême où le véhicule 1 circule sur une voie de circulation particulièrement déversante ou bombée, ou bien un cas de défaut de calibration du capteur d'angle au volant. En remarque, un tel défaut de calibration peut survenir par exemple lorsque le véhicule sort d'usine ou d'un garage, lorsque des algorithmes de calibration du capteur d'angle au volant n'ont pas encore été exécutés. On considère que le véhicule bascule d'un mode de conduite manuelle à un mode de conduite autonome alors qu'il avance en ligne droite et que sa trajectoire réelle correspond déjà sensiblement à la trajectoire de référence 12.

Le graphique peut être décomposé en trois parties P1, P2, P3 avec une abscisse commune aux trois parties. L'abscisse représente le temps exprimé en secondes. On considère que le véhicule bascule d'un mode de conduite manuel à un mode de conduite autonome à l'abscisse 0. La trajectoire T2 est interrompue après une durée d'environ 1,7 secondes après l'activation du procédé de régulation car le conducteur a dû interrompre le procédé de régulation et reprendre le contrôle manuel du véhicule.

La partie supérieure P1 du graphique illustre l'angle au volant (exprimé en degrés) pour la trajectoire T1 et pour la trajectoire T2. On observe que la trajectoire T1 engendre des variations d'angle au volant de plus ou moins cinq degrés au plus. En revanche, la trajectoire T2 engendre de fortes variations de l'angle au volant. Ces variations sont même supérieures à 10° sur une durée d'environ une seconde. En effet, comme le véhicule suit déjà la trajectoire de référence 12, la consigne d'angle de braquage calculée par un véhicule selon l'état de la technique sera sensiblement égale à 0°. Par conséquent l'angle au volant passe brutalement d'une valeur égale à l'offset (dans le cas d'espèce 15°) à une valeur égale à 0° ce qui va provoquer un effet de coup de volant important.

La partie médiane P2 du graphique illustre l'écart latéral (exprimé en mètres) du véhicule 1 par rapport à la trajectoire de référence 12 pour la trajectoire T1 et pour la trajectoire T2.

La partie inférieure P3 du graphique illustre l'accélération latérale (exprimée en m/s2) du véhicule 1 pour la trajectoire T1 et pour la trajectoire T2. L'accélération latérale subie par le véhicule suivant la trajectoire T1 demeure inférieure à environ 0.7m/s2. L'accélération latérale subie par le véhicule suivant la trajectoire T2 atteint environ 1.5m/s2.

Lorsque le véhicule suit la trajectoire T2, les passagers ont l'impression d'un vif coup de volant ce qui peut les inquiéter et troubler leur confort. Lorsque le véhicule suit la trajectoire T1, les variations d'angle au volant et les accélérations latérales sont plus modérées. Le confort des passagers est amélioré. Le conducteur n'éprouve pas le besoin de reprendre le contrôle du véhicule 1.

Grâce à l'invention, on obtient un procédé de régulation de la position latérale qui ne génère aucun coup de volant lors de son activation, même lorsque le véhicule 1 circule sur une voie de circulation déversante ou bombée ou même si le capteur d'angle au volant fournit une valeur décalée d'un offset par rapport à la valeur réelle de l'angle au volant. On obtient ainsi une transition entre un mode de conduite manuel et un mode de conduite autonome qui est confortable et rassurante en toutes circonstances.

## Revendications

1. Procédé de régulation de la position latérale d'un véhicule (1) sur une voie de circulation (10), **caractérisé en ce qu'**il comprend :

   - une étape de calcul (E21) d'un vecteur d'état de référence (Xref) du véhicule (1),
   - une étape de calcul (E22) d'un vecteur d'état observé (Xobs) du véhicule (1),
   - une étape de calcul (E23) d'une consigne d'un angle de braquage (δc) de roues directrices (2f) du véhicule (1) en fonction de la différence (Xerr) entre le vecteur d'état de référence (Xref) et le vecteur d'état observé (Xobs),

le procédé de régulation comprenant une étape d'initialisation (E1) exécutée au moment de l'activation du procédé de régulation, l'étape d'initialisation (E1) comprenant une sous-étape de calcul (E11) d'une composante (X07) d'un vecteur d'état observé initial (X0) de sorte que la consigne d'angle de braquage (δc) des roues directrices (2f) au moment de l'activation du procédé de régulation soit égale à une valeur mesurée d'angle de braquage (δm) des roues directrices (2f) au moment de l'activation du procédé de régulation.

2. Procédé de régulation selon la revendication précédente, **caractérisé en ce que** le vecteur d'état observé (Xobs) comprend tout ou partie des composantes suivantes :

- une vitesse de lacet (dψ) du véhicule (1), et
- un angle de cap (ψ) du véhicule (1), et
- une vitesse latérale (dy) du véhicule (1), et
- un écart latéral (y) du véhicule (1) par rapport à une trajectoire de référence (12), et
- une vitesse de braquage (dδ) des roues directrices (2f) du véhicule (1), et
- un angle de braquage (δ) des roues directrices (2f) du véhicule (1), et
- une intégrale de l'écart latéral (ly) du véhicule (1) par rapport à une trajectoire de référence (12).

3. Procédé de régulation selon l'une des revendications précédentes, **caractérisé en ce que** lors de la sous-étape de calcul (E11) d'une composante (X07) du vecteur d'état observé initial (X0), ladite composante (X07) est calculée en fonction d'une valeur mesurée de l'angle de braquage (δm) au moment de l'activation du procédé de régulation.

4. Procédé de régulation selon l'une des revendications précédentes, **caractérisé en ce que** le vecteur d'état observé (Xobs) comprend une composante égale à une intégrale de l'écart latéral (ly) du véhicule (1) par rapport à une trajectoire de référence (12), la valeur initiale de l'intégrale de l'écart latéral (ly) définie lors de l'étape d'initialisation (E1) étant calculée de sorte que la consigne d'angle de braquage (δc) des roues directrices (2f) au moment de l'activation du procédé de régulation soit égale à une valeur mesurée d'angle de braquage (δm) des roues directrices au moment de l'activation du procédé de régulation.

5. Procédé de régulation selon l'une des revendications précédentes, **caractérisé en ce que** l'étape de calcul (E23) de la consigne de l'angle de braquage (δc) comprend une multiplication de la différence (Xerr) entre le vecteur d'état de référence (Xref) et le vecteur d'état observé (Xobs) par un vecteur de régulation (Ks), le vecteur de régulation (Ks) étant dépendant de la vitesse (v) du véhicule (1).

6. Procédé de régulation selon la revendication 4 et selon la revendication 5, **caractérisé en ce que** la valeur initiale de l'intégrale de l'écart latéral (ly) du véhicule (1) par rapport à la trajectoire de référence (12) est calculée en fonction de composantes de la différence (Xerr) entre le vecteur d'état de référence (Xref) et le vecteur d'état observé (Xobs), et en fonction des composantes du vecteur de régulation (Ks), et en fonction de la valeur mesurée d'angle de braquage (δm) au moment de l'activation du procédé de régulation.

7. Procédé de régulation selon l'une des revendications précédentes, **caractérisé en ce que** le calcul du vecteur d'état observé (Xobs) est basé sur des grandeurs mesurées par des capteurs embarqués (7) du véhicule (1), des constantes (cf, cr, lf, lr, Iz, m, ζ, ω) caractérisant le véhicule, la vitesse (v) du véhicule (1), et une valeur de consigne d'un angle de braquage (δr) des roues directrices (2f) du véhicule (1) calculée lors d'une précédente itération du procédé de régulation.

8. Produit programme d'ordinateur comprenant des instructions de code de programme enregistrées sur un support lisible par ordinateur pour mettre en oeuvre les étapes du procédé de régulation selon l'une quelconque des revendications 1 à 7 lorsque ledit programme fonctionne sur un ordinateur.

9. Support d'enregistrement de données, lisible par un ordinateur, sur lequel est enregistré un programme d'ordinateur comprenant des instructions de code de programme de mise en oeuvre du procédé de régulation selon l'une des revendications 1 à 7.

10. Véhicule (1) automobile, **caractérisé en ce qu'**il comprend des moyens matériels et/ou logiciels mettant en oeuvre le procédé de régulation selon l'une des revendications 1 à 7.

**Patentansprüche**

1. Regelungsverfahren zur Regelung der seitlichen Position eines Fahrzeugs (1) auf einer Fahrspur (10), **dadurch gekennzeichnet, dass** es umfasst:

   - einen Schritt des Berechnens (E21) eines Referenzzustandsvektors (Xref) des Fahrzeugs (1),
   - einen Schritt des Berechnens (E22) eines beobachteten Zustandsvektors (Xobs) des Fahrzeugs (1),
   - einen Schritt des Berechnens (E23) eines Sollwerts eines Einschlagwinkels (5c) von Lenkrädern (2f) des Fahrzeugs (1) in Abhängigkeit von der Differenz (Xerr) zwischen dem Referenzzustandsvektor (Xref) und dem beobachteten Zustandsvektor (Xobs),

   wobei das Regelungsverfahren einen Initialisierungsschritt (E1) umfasst, der zum Zeitpunkt der Aktivierung des Regelungsverfahrens ausgeführt wird, wobei der Initialisierungsschritt (E1) einen Teilschritt des Berechnens (E11) einer Komponente (X07) eines initialen beobachteten Zustandsvektors (X0) umfasst, so dass der Einschlagwinkelsollwert (5c) der Lenkräder (2f) zum Zeitpunkt der Aktivierung des Regelungsverfahrens gleich einem zum Zeitpunkt der Aktivierung des Regelungsverfahrens gemessenen Einschlagwinkelwert ($\delta$m) der Lenkräder (2f) ist.

2. Regelungsverfahren nach dem vorhergehenden Anspruch, **dadurch gekennzeichnet, dass** der beobachtete Zustandsvektor (Xobs) alle oder einen Teil der folgenden Komponenten umfasst:

   - eine Giergeschwindigkeit (dW) des Fahrzeugs (1), und
   - einen Kurswinkel (W) des Fahrzeugs (1), und
   - eine seitliche Geschwindigkeit (dy) des Fahrzeugs (1), und
   - eine seitliche Abweichung (y) des Fahrzeugs (1) in Bezug auf eine Referenztrajektorie (12), und
   - eine Einschlaggeschwindigkeit (d$\delta$) der Lenkräder (2f) des Fahrzeugs (1), und
   - einen Einschlagwinkel ($\delta$) der Lenkräder (2f) des Fahrzeugs (1), und
   - ein Integral der seitlichen Abweichung (ly) des Fahrzeugs (1) in Bezug auf eine Referenztrajektorie (12).

3. Regelungsverfahren nach einem der vorhergehenden Ansprüche, **dadurch gekennzeichnet, dass** bei dem Teilschritt des Berechnens (E11) einer Komponente (X07) des initialen beobachteten Zustandsvektors (X0) diese Komponente (X07) in Abhängigkeit von einem zum Zeitpunkt der Aktivierung des Regelungsverfahrens gemessenen Wert des Einschlagwinkels ($\delta$m) berechnet wird.

4. Regelungsverfahren nach einem der vorhergehenden Ansprüche, **dadurch gekennzeichnet, dass** der beobachtete Zustandsvektor (Xobs) eine Komponente umfasst, die gleich einem Integral der seitlichen Abweichung (ly) des Fahrzeugs (1) in Bezug auf eine Referenztrajektorie (12) ist, wobei der bei dem Initialisierungsschritt (E1) definierte initiale Wert des Integrals der seitlichen Abweichung (ly) so berechnet wird, dass der Einschlagwinkelsollwert (5c) der Lenkräder (2f) zum Zeitpunkt der Aktivierung des Regelungsverfahrens gleich einem zum Zeitpunkt der Aktivierung des Regelungsverfahrens gemessenen Einschlagwinkelwert ($\delta$m) der Lenkräder ist.

5. Regelungsverfahren nach einem der vorhergehenden Ansprüche, **dadurch gekennzeichnet, dass** der Schritt des Berechnens (E23) des Sollwerts des Einschlagwinkels (5c) eine Multiplikation der Differenz (Xerr) zwischen dem Referenzzustandsvektor (Xref) und dem beobachteten Zustandsvektor (Xobs) mit einem Regelungsvektor (Ks) umfasst, wobei der Regelungsvektor (Ks) von der Geschwindigkeit (v) des Fahrzeugs (1) abhängt.

6. Regelungsverfahren nach Anspruch 4 und nach Anspruch 5, **dadurch gekennzeichnet, dass** der initiale Wert des Integrals der seitlichen Abweichung (ly) des Fahrzeugs (1) in Bezug auf die Referenztrajektorie (12) in Abhängigkeit von Komponenten der Differenz (Xerr) zwischen dem Referenzzustandsvektor (Xref) und dem beobachteten Zustandsvektor (Xobs) und in Abhängigkeit von den Komponenten des Regelungsvektors (Ks) und in Abhängigkeit von dem zum Zeitpunkt der Aktivierung des Regelungsverfahrens gemessenen Einschlagwinkelwert ($\delta$m) berechnet wird.

7. Regelungsverfahren nach einem der vorhergehenden Ansprüche, **dadurch gekennzeichnet, dass** die Berechnung des beobachteten Zustandsvektors (Xobs) auf Größen, die von in das Fahrzeug (1) integrierten Sensoren (7) gemessen werden, Konstanten (cf, cr, lf, lr, Iz, $\zeta$, $\omega$), die das Fahrzeug kennzeichnen, der Geschwindigkeit (v) des Fahrzeugs (1) und einem bei einer vorhergehenden Iteration des Regelungsverfahrens berechneten Sollwert eines Einschlagwinkels ($\delta$r) der Lenkräder (2f) des Fahrzeugs (1) beruht.

8. Computerprogrammprodukt, das auf einem computerlesbaren Medium gespeicherte Programmcodeanweisungen umfasst, um beim Ausführen des Programms auf einem Computer die Schritte des Regelungsverfahrens nach einem der Ansprüche 1 bis 7 auszuführen.

9. Computerlesbares Datenspeichermedium, auf dem ein Computerprogramm gespeichert ist, das Programmcodeanweisungen zum Ausführen des Regelungsverfahrens nach einem der Ansprüche 1 bis 7 umfasst.

10. Kraftfahrzeug (1), **dadurch gekennzeichnet, dass** es Hardware- und/oder Softwaremittel umfasst, die das Regelungsverfahren nach einem der Ansprüche 1 bis 7 ausführen.

**Claims**

1. Method for controlling the lateral position of a vehicle (1) on a traffic lane (10), **characterized in that** it comprises:

   - a step (E21) for calculating a reference state vector (Xref) of the vehicle (1),
   - a step (E22) for calculating an observed state vector (Xobs) of the vehicle (1),
   - a step (E23) for calculating a steering angle setpoint ($\delta$c) for the steerable wheels (2f) of the vehicle (1) as a function of the difference (Xerr) between the reference state vector (Xref) and the observed state vector (Xobs),

   the control method comprising an initialization step (E1) executed at the moment the control method is activated, the initialization step (E1) comprising a substep (E11) for calculating a component (X07) of an initial observed state vector (X0) such that the steering angle setpoint ($\delta$c) for the steerable wheels (2f) at the moment the control method is activated is equal to a measured steering angle value ($\delta$m) of the steerable wheels (2f) at the moment the control method is activated.

2. Control method according to the preceding claim, **characterized in that** the observed state vector (Xobs) comprises all or some of the following components:

   - a yaw rate (d$\psi$) of the vehicle (1), and
   - a heading angle ($\psi$) of the vehicle (1), and
   - a lateral speed (dy) of the vehicle (1), and
   - a lateral deviation (y) of the vehicle (1) with respect to a reference trajectory (12), and
   - a steering speed (d$\delta$) of the steerable wheels (2f) of the vehicle (1), and
   - a steering angle ($\delta$) of the steerable wheels (2f) of the vehicle (1), and
   - an integral (Iy) of the lateral deviation of the vehicle (1) with respect to a reference trajectory (12) .

3. Control method according to one of the preceding claims, **characterized in that** during the substep (E11) for calculating a component (X07) of the initial observed state vector (X0), said component (X07) is calculated as a function of a measured steering angle value ($\delta$m) at the moment the control method is activated.

4. Control method according to one of the preceding claims, **characterized in that** the observed state vector (Xobs) comprises a component equal to an integral (Iy) of the lateral deviation of the vehicle (1) with respect to a reference trajectory (12), the initial value of the integral (Iy) of the lateral deviation defined during the initialization step (E1) being calculated such that the steering angle setpoint ($\delta$c) for the steerable wheels (2f) at the moment the control method is activated is equal to a measured steering angle value ($\delta$m) of the steerable wheels at the moment the control method is activated.

5. Control method according to one of the preceding claims, **characterized in that** the step (E23) for calculating the steering angle setpoint (5c) comprises a multiplication of the difference (Xerr) between the reference state vector (Xref) and the observed state vector (Xobs) by a control vector (Ks), the control vector (Ks) being dependent on the speed (v) of the vehicle (1).

6. Control method according to Claim 4 and according to Claim 5, **characterized in that** the initial value of the integral (Iy) of the lateral deviation of the vehicle (1) with respect to the reference trajectory (12) is calculated as a function of components of the difference (Xerr) between the reference state vector (Xref) and the observed state vector (Xobs), and as a function of the components of the control vector (Ks), and as a function of the measured steering angle value ($\delta$m) at the moment the control method is activated.

7.  Control method according to one of the preceding claims, **characterized in that** the calculation of the observed state vector (Xobs) is based on quantities measured by onboard sensors (7) of the vehicle (1), constants (cf, cr, lf, lr, Iz, m, $\zeta$, w) characterizing the vehicle, the speed (v) of the vehicle (1), and a steering angle setpoint value ($\delta$r) for the steerable wheels (2f) of the vehicle (1) calculated during a previous iteration of the control method.

8.  Computer program product containing program code instructions recorded on a computer-readable medium to implement the steps of the control method according to any one of Claims 1 to 7 when said program runs on a computer.

9.  Computer-readable data recording medium on which there is recorded a computer program containing program code instructions for implementing the control method according to one of Claims 1 to 7.

10. Motor vehicle (1), **characterized in that** it comprises hardware and/or software means implementing the control method according to one of Claims 1 to 7.

[Fig. 1]

FIGURE 1

[Fig. 2]

**FIGURE 2**

[Fig. 3]

**FIGURE 3**

[Fig. 4]

FIGURE 4

[Fig. 5]

FIGURE 5

[Fig. 6]

**FIGURE 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3043977 A1